# EUROPEAN PATENT SPECIFICATION

(11) **EP 1 741 891 B1**
(45) Date of publication and mention of the grant of the patent: **20.08.2008**
(21) Application number: 06076253.1
(22) Date of filing: 16.06.2006
(51) Int. Cl.: F01N 3/28, F01N 3/022, B01D 46/24

(54) **An exhaust treatment device and method of making the same**
Abgasbehandlungsvorrichtung und Herstellungsverfahren dafür
Dispositif de traitement de gaz d'échappement et procédé de fabrication associé

(30) Priority: 06.07.2005 US 175822
(43) Date of publication of application: 10.01.2007
(73) Proprietor: Delphi Technologies, Inc., Troy, Michigan 48007 (US)
(72) Inventor: Jankowski, Paul E., Goodrich, MI 48438 (US)
(74) Representative: Denton, Michael John

(56) References cited:
- FR-A- 2 832 756
- US-A- 5 190 571
- US-B1- 6 328 777

## Description

### BACKGROUND OF THE INVENTION

Exhaust treatment devices can include catalytic converters, evaporative emissions devices, scrubbing devices (e.g., hydrocarbon, sulfur, and the like), particulate filters, traps, adsorbers (e.g., NOx, SOx, and the like), absorbers, plasma reactors (e.g., thermal, non-thermal, and the like), and the like, as well as combinations comprising at least one of the foregoing devices One function of these devices is to treat an exhaust stream, thereby reducing the concentration of at least one component in the exhaust stream.

Generally, an exhaust treatment device can comprise a substrate upon which a catalyst material can be disposed. While much attention has been directed to the catalyst materials employed in these exhaust treatment devices, less attention has been directed to the substrate(s) of these devices. The costs associated with manufacturing a substrate for use in an exhaust treatment dev ice has been increasing, thereby making the substrate one of the most expensive components of the exhaust treatment device. More particularly, a substrate comprising silicon carbide, which can be particularly useful in a diesel particular filter, has been especially expensive to manufacture.

US-A-5 190 571 discloses an exhaust treatment device having first and second racks in the form of a diesel particulate trap that has a filtering element which is a mass of fibrous filter material that radially fills a tubular casing. The filtering element employs lofty yam extending in straight lines in a repeating pattern, which lines of lofty yarn have been compacted to form a plurality of fibrous walls that intersect to form tunnels extending in the axial or longitudinal direction of the casing. Some of the tunnels are filled with plugs that afford structural integrity while others of the tunnels remain open. The ends of the filtering element are covered by endplates. Substantially one-half of the open tunnels are axially aligned with openings in the inlet endplate and with imperforate areas in the outlet endplate, and the other open tunnels are axially aligned with openings in the outlet endplate and with imperforate areas in the inlet endplate. Exhaust gases entering tunnels open to the inlet pass through the compact fibrous walls and exit through tunnels open to the outlet.

Therefore, what is needed in the art are improvements over existing substrates for use in an exhaust treatment device (e.g., a diesel particulate filter).

### SUMMARY OF THE INVENTION

The present invention in its various aspects is as set out in the appended claims.

Disclosed herein is an exhaust treatment device comprising a substrate assembly, and methods of making the same.

One embodiment of a diesel particulate filter comprises a substrate: assembly disposed in a housing. The substrate assembly comprises a first rack comprising a first array of openings, a second rack comprising a second array of openings, a third rack comprising a third array of openings; a fourth rack comprising a fourth array of openings. The first rack and the second rack are disposed a first predetermined distance from each other near a first end of the substrate assembly. The third rack and the fourth rack are disposed a second predetermined distance from each other near a second end of the substrate assembly opposite the first end. The second array, third array, and fourth array correspond to the first array. A plurality of individual substrate elements are disposed in each of the first array, second array, third array, and fourth array. A first retention material is disposed between the first rack and the second rack and a second retention material disposed between the third rack and the fourth rack. The retention material is in physical communication with the plurality, the first rack, and the second rack. The second retention material is in physic al communication with the plurality, the third rack, and the fourth rack.

One embodiment of a method of making an exhaust treatment device having a substrate assembly (12) comprises disposing a plurality of individual substrate elements in a first array of openings of a first rack; disposing a retention material in physical communication with the plurality; disposing the individual substrate element; in a second array of openings of a second rack, wherein the second array of openings corresponds to the first array of openings; compressing the retention material between the first rack and the second rack to form a substrate assembly; and disposing the substrate assembly in a housing.

The above-described and other features will be appreciated and understood by those skilled in the art from the following detailed description, drawings, and appended claims.

### BRIEF DESCRIPTION OF THE DRAWINGS

Refer now to the figures, which are exemplary embodiments, and wherein the like elements are numbered alike.
Figure 1 is a partial cross sectional view of an exhaust treatment device comprising as a substrate assembly.
Figure 2 is a cross sectional view of a substrate assembly for an exhaust treatment device which illustrates the first rack.
Figure 3 is a cross sectional view of an individual substrate element.
Figure 4 is a cross sectional view of an individual substrate element comprising a wall flow type design.
Figure 5 is a partial cross sectional view of an exhaust treatment device and semi-schematic illustration of a method of compressing a retention material between two racks of a substrate assembly.

### DESCRIPTION OF THE PREFERRED EMBODIMENT

It should be noted that the terms "first," "second," and the like herein do not denote any order or importance, but rather are used to distinguish one element from another, and the terms "a" and "an" herein do not denote a limitation of quantity, but rather denote the presence of at least one of the referenced items.

In one method of making a substrate (also referred to as a brick) for use in an exhaust treatment device, individual substrate elements can be cemented together to form a substrate. The substrate can then be shaped (e.g., machined) to a suitable size and shape for use in an exhaust treatment device. A layer (e.g., coating, "skin", and the like) of cement can be applied to a surface of the substrate to provide a gas-sealing surface. The machining process is very costly and the cement can be mechanically weak, which can lead to substrate fracture and/or failure. As will be discussed in greater detail throughout this disclosure, it has been discovered that rather than cementing individual substrate elements together to form a substrate (brick), the individual substrate elements can be arranged within a set(s) of rack(s) to form a substrate assembly that can act as a substrate, but with a number of added advantages.

While the method and substrate assembly disclosed herein can be employed in a variety of exhaust treatment devices (e.g., those exhaust treatment devices discussed above), the method and substrate assembly are particularly useful in a particulate filter (e.g., a diesel particulate filter (DPF), a catalytic diesel particulate filter (CPDF), and the like). For ease in discussion, the exhaust treatment device will be discussed hereinafter in relation to a diesel particulate filter.

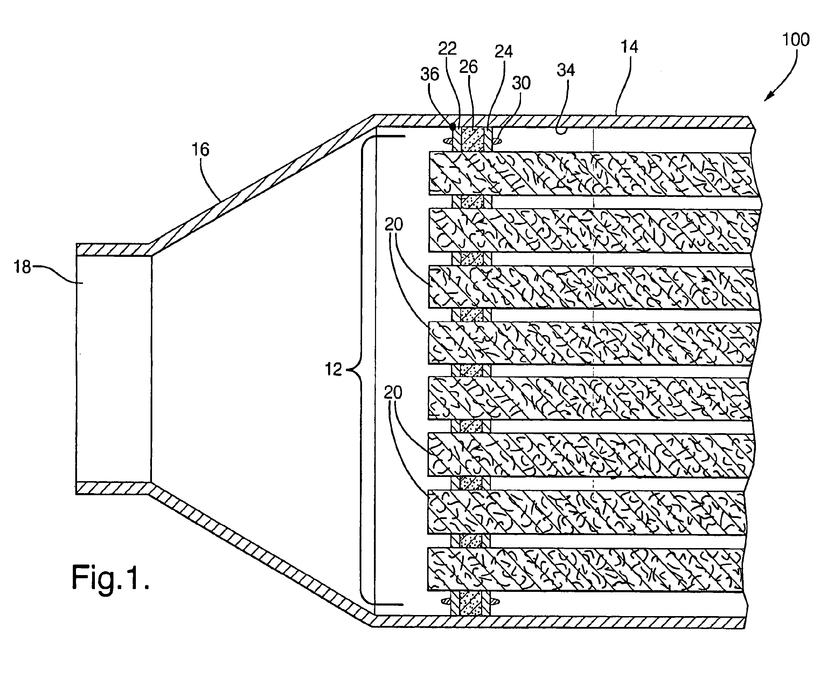

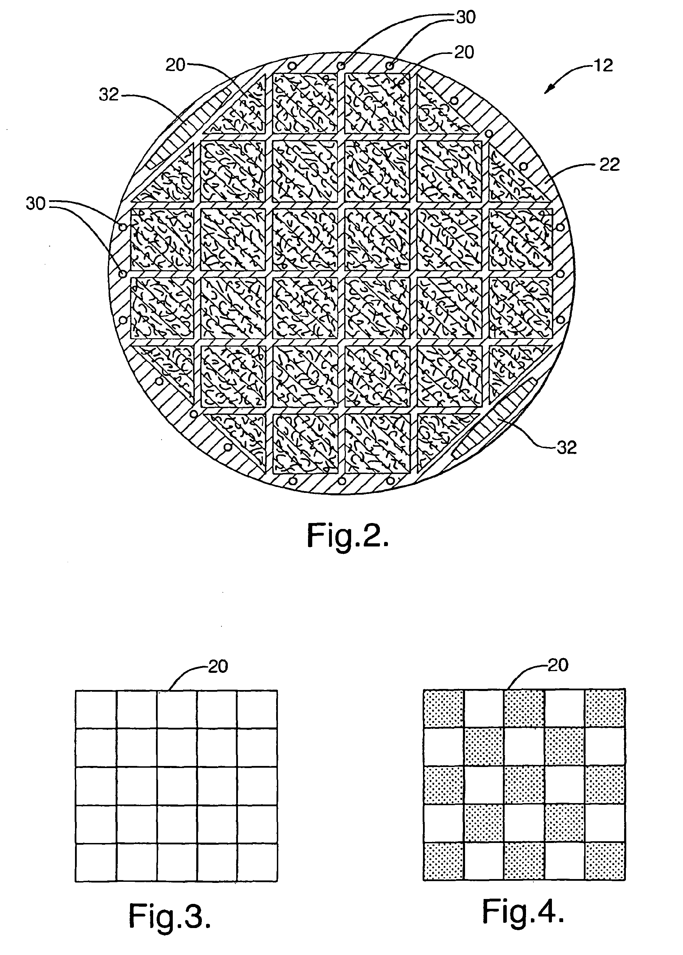

Referring now to Figures 1 and 2, an exemplary embodiment of a diesel particulate filter generally designated 100 is illustrated. The diesel particulate filter 100 can comprise a substrate assembly 12 disposed within a housing 14. An end assembly 16 (e.g., an end cone(s), end plate, and the like) can be disposed in physical communication with the housing 14 (e.g., can be formed from the housing 14 or can be attached to the housing 14). In various embodiments, the housing 14 and end assembly 16 can be a one-piece unit. The end assembly 16 can comprise an opening 18, wherein the opening 18 can enable fluid communication with an exhaust emission source (e.g., a compression ignition engine).

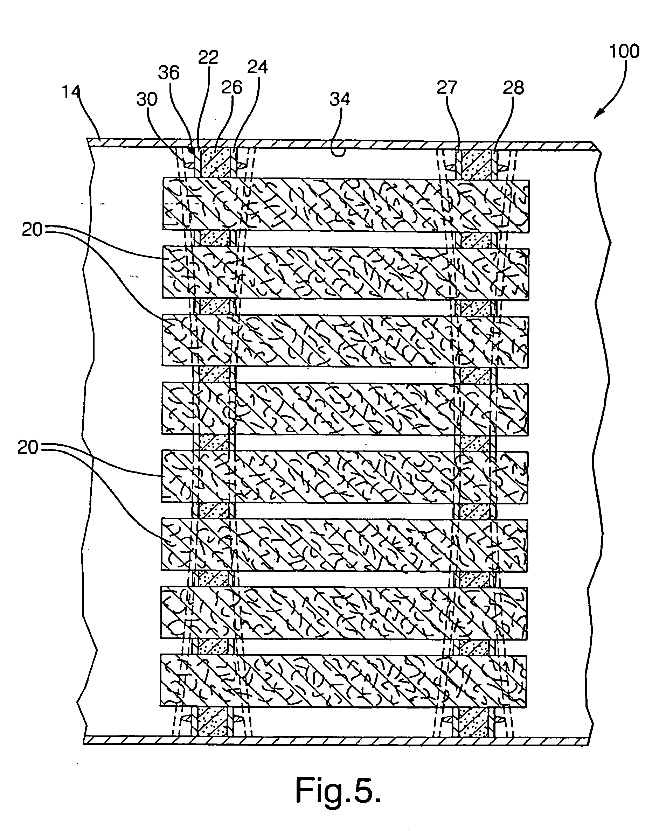

The substrate assembly 12 can comprise individual substrate elements 20, a set of racks (e.g., first rack 22 and second rack 24), and a retention material 26 disposed between each rack of the set of racks. For example, the retention material 26 can be disposed between and in physical communication with the first rack 22 and the second rack 24 such that a compressive force can be applied about each of the individual substrate elements 20. More particularly, each rack can comprise a predetermined number of openings (e.g., cut outs) corresponding to the number, size(s), and shape(s) of the individual substrate elements 20 such that each individual substrate element 20 can be disposed within a respective opening. These cut outs can be arranged to form a predetermined pattern (array) in each respective rack. Further, the first rack 22 and the second rack 24 can have corresponding arrays of cut outs such that the number, size(s), shape(s), location, alignment, and the like, of each cut out can be the same on each of the first rack 22 and the second rack 24 (e.g., as is shown in Figures 1 and 5).

While any number of racks can be employed, the substrate assembly 12 can comprise a sufficient number of rack sets to provide the desired structural and mechanical strength to the substrate assembly 12. For example, one set of racks (e.g., first rack 22 and second rack 24) can be disposed at a first end of the substrate assembly 12 and a second set of racks (e.g., third rack 27 and fourth rack 28) (see Figure 5) can be disposed at a second end of the substrate assembly 12 opposite the first end. For each set of racks, the racks making up the set can be disposed at a predetermined distance away from each other such that the retention material 26 disposed between the respective racks can be sufficiently compressed to retain each individual substrate element 20 with the respective racks (e.g., first rack 22 and second rack 24). The racks can be disposed near the ends of the substrate elements, thereby providing structural integrity to the elements. Depending upon the desired structural integrity and the operating conditions for the substrate elements (e.g., off road applications (e.g., substantial vibration, jolts, etc.), on road applications (e.g., substantially small vibrations), and the like), additional racks can be disposed between the racks disposed near the ends of the substrate elements 20. For example, rack(s) can be disposed near the middle of the substrate elements. If only one middle rack is employed, retention material can optionally be disposed between the middle rack and the second rack, and/or between the middle rack and the third rack, desirably in contact with each individual support element 20.

Embodiments are also envisioned where multiple substrate assemblies can be employed in the diesel particulate filter 100. While each substrate assembly can comprise one set of racks, it can be desirable for each substrate assembly to comprise at least two sets of racks (e.g., a total of four racks). It is noted that by employing multiple substrate assemblies in an exhaust treatment device, varying catalyst materials can be disposed on the individual substrate elements 20 for each substrate assembly 12. Additionally, it is noted that a gap of a predetermined distance can be provided between each substrate assembly 12.

The retention material 26 can be disposed between each respective rack (e.g., between first rack 22 and second rack 24). As noted above, the retention material 26 can act to hold each individual substrate element 20 in position. Moreover, the retention material 26 can act as a gas barrier such that any space between a given cutout of a given rack and each individual substrate element 20 can be blocked with the retention material 26 to prevent exhaust gas from by-passing the individual substrate elements 20.

The retention material 26 can apply the desired compressive forces about the substrate elements 20 by, for example, positioning the first rack 22 and the second rack 24 at a predetermined distance from each other, with the retention material 26 disposed therebetween, and desirably disposed therebetween and around each substrate element 20. During assembly, the retention material 26 can be compressed between adjacent racks.

In various embodiments, the first rack 22 and the second rack 24 can be disposed in operable communication with each other via connectors (e.g., rivets 30, screws, and the like). Additionally/alternatively, a handle(s) 32 can be disposed in each of the first rack 22 and the second rack 24, wherein a handle stem (not shown) disposed between the first rack 22 and the second rack 24 can provide the desired distance between each of the first rack 22 and the second rack 24. It is noted that the handle 32 can advantageously allow for ease in handling and removing the substrate assembly 12.

The substrate assembly 12 can be held in position in the housing 14 by any suitable method. For example, any of the racks (e.g., first rack 22 and second rack 24) can be attached (e.g., welded, bolted, screwed, riveted, and the like) to the housing 14 illustrated as a bead 36 in Figure 1. In other embodiments, the rack(s) can be disposed in physical communication with an inner wall 34 of the housing 14 such that the substrate assembly 12 is capable of being easily removed from the housing 14. More particularly, the substrate assembly can be removed for cleaning, replacement, and the like.

With regards to the individual substrate elements 20, it is noted that multiple shapes and sizes of the individual substrate elements 20 can be employed in the substrate assembly. The geometry of each individual substrate element can be chosen to correspond to a given cut out in the array of cut outs in a given rack, and to optimize surface area available for treating an exhaust gas. For example, each individual substrate element 20 can have a honeycomb geometry, with the combs through-channel having any multi-sided or rounded shape, with substantially square, triangular, pentagonal, hexagonal, heptagonal, or octagonal or similar geometries preferred due to ease of manufacturing and increased surface area. In one embodiment of a honeycomb geometry with square channels is illustrated in Figure 3. In other embodiments, the individual substrate elements 20 can comprise a wall flow type design similar to that illustrated in Figure 4. In a wall flow type design, alternate cells of the honeycombed structure can be plugged such that exhaust gas enters in one cell, is forced through the porous walls of the cell, and then exits the structure through another cell.

The individual substrate elements 20 can comprise any material designed for use in a diesel engine environment and having the following characteristics: (1) capable of operating at temperatures up to about 1000°C, with temperatures of about 100°C to about 600°C typical; (2) capable of withstanding exposure to hydrocarbons, nitrogen oxides, carbon monoxide, particulate matter (e.g., soot and the like), carbon dioxide, and/or gaseous compounds of sulfur such as SO₂, COS, and H₂S; and (3) having sufficient surface area and structural integrity to support an optional catalyst and washcoat materials. Some possible substrate materials include cordierite, silicon carbide, metal, metal oxides (e.g., alumina, and the like), glasses, and the like, and mixtures comprising at least one of the foregoing materials. In a particular embodiment, the individual substrate elements 20 can be silicon carbide.

Some ceramic materials that can be used as the individual substrate elements 20 include "Honey Ceram", commercially available from NGK-Locke, Inc, Southfield, Michigan, and "Celcor", commercially available from Coming, Inc., Corning, New York. These materials can be in the form of foils, mat, fibrous material, monoliths (e.g., a honeycomb structure, and the like), other porous structures (e.g., porous glasses, sponges), foams, and the like, and combinations comprising at least one of the foregoing materials and forms, e.g., metallic foils, open pore alumina sponges, and porous ultra-low expansion glasses.

As briefly mentioned above, a catalyst(s) can be disposed on/in/throughout (hereinafter "on") the individual substrate elements 20. The catalyst (as well as any support, stablizer, promoter, and the like), can be washcoated, imbibed, impregnated, physisorbed, chemisorbed, precipitated, or otherwise applied the individual substrate elements 20. It is further noted that catalyst metals, catalyst materials, and the like that can be employed can vary depending on the exhaust treatment device in which they are employed.

For a catalyzed diesel particulate filter (CDPF), possible catalyst materials include metals, such as platinum, palladium, rhodium, iridium, osmium, ruthenium, tantalum, zirconium, yttrium, cerium, nickel, manganese, copper, and the like, as well as oxides, alloys, and combinations comprising at least one of the foregoing catalyst materials, and other catalysts. Suitable support materials include aluminum oxide, silicon oxide, zirconium oxide, titanium oxide, and the like, as well as combinations comprising at least one of the following.

With regards to the retention material 26, it is noted that the retention material 26, which can be in the form of a mat, particulates, or the like, can be an intumescent material (e.g., a material that comprises vermiculite component, i.e., a component that expands upon the application of heat), a non-intumescent material, or a combination comprising at least one of the foregoing. These materials can comprise ceramic materials (e.g., ceramic fibers) and other materials such as organic and inorganic binders and the like, or combinations comprising at least one of the foregoing materials. Non-intumescent materials can include materials such as those sold under the trademarks "NEXTEL" and "INTERAM 1101HT" by the "3M" Company, Minneapolis, Minnesota, or those sold under the trademark, "FIBERFRAX" and "CC-MAX" by the Unifrax Co., Niagara Falls, New York, and the like. Intumescent materials include materials sold under the trademark "INTERAM" by the "3M" Company, Minneapolis, Minnesota, as well as those intumescents which are also sold under the aforementioned "FIBERFRAX" trademark.

With regards to the housing 14, end assembly 16, and the racks (first rack 22, second rack 24, third rack 27, and fourth rack 28), it is noted that the choice of material for each of these components can depend upon the type of exhaust fluid, the maximum temperature reached by the individual substrate elements 20, the maximum temperature of the exhaust fluid stream, and the like. Suitable materials can include any material that is capable of resisting under-car salt, temperature, and corrosion. For example, ferrous materials can be employed such as ferritic stainless steels. Ferritic stainless steels can include stainless steels such as, e.g., the 400 - Series such as SS-409, SS-439, and SS-441.

In a method of making the diesel particulate filter 100, the rack is prepared with the desired amount of openings having the desired size and shape. The openings can be formed simultaneously with the remainder of the rack (e.g., the rack can be formed from an extruded component that is cut to the desired tack thickness, or otherwise simultaneously formed), or the openings can be formed subsequently (e.g., openings can be cut into a disk/plate, forming walls that define the desired opening, or the like). The substrate assembly 12 can then be disposed within housing 14, wherein the substrate assembly 12 can be assembled prior to being disposed within a housing 14 or assembled within the housing 14. For example, a first rack 22 can be held in position within the housing 14. The individual substrate elements 20 can then be disposed in each respective opening corresponding to the given shape of the individual substrate element 20. For ease in manufacturing, it is noted that each opening and individual substrate element 20 can comprise substantially the same shape. A retention material 26 can be disposed in physical communication with substrate elements 20 and the first rack 22, and desirably in physical communication with each individual substrate element 20 (e.g., such that the retention material 26 is disposed around each substrate element 20). A second rack 24 can be positioned relative to the first rack 22 such that the retention material 26 can be disposed between the first rack 22 and the second rack 24.

Referring now to Figure 5, it is noted that each of the racks can be spring-like illustrated by dashed lines in the figure such that the retention material 26 can apply a compressive force against each individual substrate element 20 when each rack in a set are disposed in operable communication with each other. For example, first rack 22 and second rack 24 can comprise a semi-bowl like shape before assembly (e.g., concave or convex depending on the assembly method and viewing perspective). The first rack 22 can be attached (e.g., riveted) to second rack 24, e.g., using rivets 30, wherein after attaching each of the first rack 22 and the second rack 24 can comprise a substantially flat shape, which can allow the retention material to be compressed between the first rack 22 and the second rack 24.

Figure 5 illustrates an embodiment were two sets of racks are employed. A first set of racks can comprise first rack 22 and second rack 24. The second set of racks can comprise third rack 27 and fourth rack 28. It is noted that the above described assembly process can be repeated for each set of racks employed in the diesel particulate filter 100. In embodiments where two sets of racks are employed, each set can be disposed at each end of the substrate assembly 12 to provide structural and mechanical stability to the substrate assembly.

The substrate assembly 12 and methods of making discussed above can offer a number of advantages. For example, as briefly discussed above in one method of making the substrate (especially substrates (bricks) comprising silicon carbide). The substrate assembly 12 can be formed without cementing. Since cementing methods can be time consuming, can lead to mechanical failure in a substrate, and the like, a diesel particulate filter comprising the substrate assembly 12 can be less costly and out perform (e.g., have a longer life) than a diesel particulate filter made using a cemented substrate. Further, since the individual substrate elements 20 can be disposed within a rack, a greater tolerance for variations in the shape of the individual substrate elements can be accepted, thereby leading to an increase in the yield of the individual substrate elements 20.

Additionally, since each individual substrate element is disposed with in the rack(s), embodiments are envisioned where no retention material 26 is employed between the inner wall 34 of the housing 14 and the substrate assembly 12. This can advantageously reduce the overall cost of manufacturing the diesel particulate filter, since less material would need to be employed and less processing time and equipment would be needed to make the diesel particulate filter.

Yet another advantage can be realized in embodiments where a catalyst is disposed on each individual substrate element 20. Since the catalyst can be applied to each individual element, there can be less of a variation in catalyst composition across a cross section of the substrate assembly 12 compared to a cross section of a substrate (brick). Without being bound by theory, less variation in catalyst composition can lead to a more control catalytic reaction throughout the particulate filter 100, which can reduce temperature spikes in the particulate filter, and the like.

The present process eliminates the need for machining ceramic materials. Additionally, there is physical access to the circumference of the individual substrate elements. This enables the inclusion of sensor(s) (e.g., temperature, and the like), which can be used in physical protection schemes (over-temperature), on-board diagnostics, regeneration control algorithms, and the like.

## Claims

1. An exhaust treatment device (100), comprising:
a substrate assembly (12) disposed in a housing (14), wherein the substrate assembly (12) comprises
a first rack (22) comprising a first array of openings,
a second rack (24) comprising a second array of openings, wherein the first rack (22) and the second rack (24) are disposed at a first predetermined distance from each other near a first end of the substrate assembly;
a third rack (27) comprising a third array of openings;
a fourth rack (28) comprising a fourth array of openings, wherein the third rack and the fourth rack are disposed at a second predetermined distance from each other near a second end of the substrate assembly opposite the first end, and wherein each of the second array, third array, and fourth array correspond to the first array;
a plurality of individual substrate elements (20) disposed in each of the first array, second array, third array, and fourth array;
a first retention material (26) disposed between the first rack (22) and the second rack (24), wherein the first retention material (26) is in physical communication with each individual substrate element (20), the first rack (22), and the second rack (24); and
a second retention material disposed between the third rack and the fourth rack, wherein the second retention material is in physical communication with each individual substrate element, the third rack, and the fourth rack.

2. The exhaust treatment device (100) of Claim 1, wherein the substrate elements comprise silicon carbide.

3. The exhaust treatment device (100) of Claim 1, wherein the substrate elements comprise a wall flow type design.

4. The exhaust treatment device (100) of Claim 1, wherein the substrate elements comprise a catalyst.

5. A method of making an exhaust treatment device (100) having a substrate assembly (12) comprising:
disposing a plurality of individual substrate elements (20) in a first array of openings of a first rack (22);
disposing a retention material (26) in physical communication with the plurality; disposing the individual substrate elements (20) in a second array of openings of a second rack (24), wherein the second array of openings corresponds to the first array of openings;
compressing the retention material (26) between the first rack (22) and the second rack (24); and
disposing the substrate assembly (12) in a housing (14).

6. The method of Claim 5, further comprising attaching the first rack (22) to the second rack (24).

7. The method of Claim 6, further comprising attaching the substrate assembly (12) to the housing (14).

8. The method of Claim 7, wherein the substrate assembly (12) is attached to the housing (14) by attaching an attachment rack to an inner wall of the housing (14), wherein the attachment rack is selected from the group consisting of the first rack (22), the second rack (24), and a combination comprising at least one of the foregoing racks.

9. The method of Claim 5, wherein the exhaust treatment device (100) is a diesel particulate filter.

## Patentansprüche

1. Abgasbehandlungsvorrichtung (100) bestehend aus:
einer Substratbaugruppe (12) in einem Gehäuse (14), wobei die Substratbaugruppe (12) aus folgendem besteht:
einem ersten Rack (22) mit einer ersten Gruppe von Öffnungen,
einem zweiten Rack (24) mit einer zweiten Gruppe von Öffnungen, wobei das erste Rack (22) und das zweite Rack (24) in einem ersten vorgegebenen Abstand voneinander in der Nähe des ersten Endes der Substratbaugruppe angeordnet sind;
einem dritten Rack (27) mit einer dritten Gruppe von Öffnungen;
einem vierten Rack (28) mit einer vierten Gruppe von Öffnungen, wobei das dritte Rack und das vierte Rack in einem zweiten vorgegebenen Abstand voneinander in der Nähe des zweiten Endes der Substratbaugruppe gegenüber dem ersten Ende angeordnet sind und sowohl die zweite Gruppe als auch die dritte und vierte Gruppe der ersten Gruppe entsprechen;
eine Mehrzahl von einzelnen Substratelementen (20), die jeweils in der ersten, zweiten, dritten und vierten Gruppe von Öffnungen angeordnet sind;
einem ersten Bindungsmaterial (26), das zwischen dem ersten Rack (22) und dem zweiten Rack (24) angeordnet ist, wobei das erste Bindungsmaterial (26) mit den einzelnen Substratelementen (20), dem ersten Rack (22) und dem zweiten Rack (24) direkt in Berührung steht; und einem zweiten Bindungsmaterial, das zwischen dem dritten Rack und dem vierten Rack angeordnet ist, wobei das zweite Bindungsmaterial mit den einzelnen Substratelementen, dem dritten Rack und dem vierten Rack direkt in Berührung steht.

2. Die Abgasbehandlungsvorrichtung (100) nach Anspruch 1 mit Substratelementen, die Siliziumkarbid enthalten.

3. Die Abgasbehandlungsvorrichtung (100) nach Anspruch 1 mit Substratelementen, die nach dem Prinzip der Wandstromfilter ausgeführt sind.

4. Die Abgasbehandlungsvorrichtung (100) nach Anspruch 1 mit Substratelementen, die einen Katalysator enthalten.

5. Ein Verfahren zur Herstellung einer Abgasbehandlungsvorrichtung (100) mit einer Substratbaugruppe (12), bestehend aus folgenden Schritten:
Anordnung einer Mehrzahl einzelner Substratelemente (20) in einer ersten Gruppe von Öffnungen in einem ersten Rack (22);
Anordnung eines Bindungsmaterials (26) in direkter Berührung mit den einzelnen Substratelementen;
Anordnung der einzelnen Substratelemente (20) in einer zweiten Gruppe von Öffnungen in einem zweiten Rack (24), wobei die zweite Gruppe von Öffnungen der ersten Gruppe von Öffnungen entspricht;
Kompaktieren des Bindungsmaterials (26) zwischen dem ersten Rack (22) und dem zweiten Rack (24) und
Anordnung der Substratbaugruppe (12) in einem Gehäuse (14).

6. Das Verfahren nach Anspruch 5 beinhaltet ferner die Befestigung des ersten Racks (22) am zweiten Rack (24).

7. Das Verfahren nach Anspruch 6 beinhaltet ferner die Befestigung der Substratbaugruppe (12) am Gehäuse (14).

8. Das Verfahren nach Anspruch 7, nach dem die Substratbaugruppe (12) **dadurch** am Gehäuse (14) befestigt wird, dass an der Innenwand des Gehäuses (14) ein Anbau-Rack befestigt wird, wobei das Anbau-Rack aus der Gruppe gewählt wird, die aus dem ersten Rack (22), dem zweiten Rack (24) und einer Kombination mit mindestens einem der obigen Racks besteht.

9. Ein Verfahren nach Anspruch 5, bei dem die Abgasbehandlungsvorrichtung (100) ein Dieselpartikelfilter ist.

## Revendications

1. Dispositif de traitement de gaz d'échappement (100), comprenant :
un ensemble formant substrat (12) disposé dans un boîtier (14), ledit ensemble formant substrat (12) comprenant :
un premier châssis (22) comprenant un premier réseau d'ouvertures,
un second châssis (24) comprenant un second réseau d'ouvertures, ledit premier châssis (22) et ledit second châssis (24) étant disposés à une première distance prédéterminée l'un de l'autre à proximité d'une première extrémité de l'ensemble formant substrat ;
un troisième châssis (27) comprenant un troisième réseau d'ouvertures ; un quatrième châssis (28) comprenant un quatrième réseau d'ouvertures, ledit troisième châssis et ledit quatrième châssis étant disposés à une seconde distance prédéterminée l'un de l'autre au voisinage d'une seconde extrémité de l'ensemble formant substrat opposée à la première extrémité, et dans lequel chacun parmi le second réseau, le troisième réseau, et le quatrième réseau correspond au premier réseau ;
une pluralité d'éléments de substrat individuels (20) disposés dans chacun parmi le premier réseau, le second réseau, le troisième réseau et le quatrième réseau ;
un premier matériau de rétention (26) disposé entre le premier châssis (22) et le second châssis (24), ledit premier matériau de rétention (26) étant en communication physique avec chaque élément de substrat individuel (20), avec le premier châssis (22) et avec le second châssis (24) ; et un second matériau de rétention disposé entre le troisième châssis et le quatrième châssis, ledit second matériau de rétention étant en communication physique avec chaque élément de substrat individuel, avec le troisième châssis et avec le quatrième châssis.

2. Dispositif de traitement de gaz d'échappement (100) selon la revendication 1, dans lequel les éléments de substrat comprennent du carbure de silicium.

3. Dispositif de traitement de gaz d'échappement (100) selon la revendication 1, dans lequel les éléments de substrat comprennent une caractéristique du type à écoulement sur une paroi.

4. Dispositif de traitement de gaz d'échappement (100) selon la revendication 1, dans lequel les éléments de substrat comprennent un catalyseur.

5. Procédé pour réaliser un dispositif de traitement de gaz d'échappement (100) ayant un ensemble formant substrat (12), comprenant les opérations suivantes :
on dispose une pluralité d'éléments de substrat individuels (20) dans un premier réseau d'ouvertures d'un premier châssis (22) ;
on dispose un matériau de rétention (26) en communication physique avec la pluralité ;
on dispose les éléments de substrat individuels (20) dans un second réseau d'ouvertures d'un second châssis (24), dans lequel le second réseau d'ouvertures correspond au premier réseau d'ouvertures ;
on comprime le matériau de rétention (26) entre le premier châssis (22) et le second châssis (24) ; et
on dispose l'ensemble formant substrat (12) dans un boîtier (14).

6. Procédé selon la revendication 5, comprenant en outre l'opération consistant à attacher le premier châssis (22) au second châssis (24).

7. Procédé selon la revendication 6, comprenant en outre l'opération consistant à attacher l'ensemble formant substrat (12) au boîtier (14).

8. Procédé selon la revendication 7, dans lequel l'ensemble formant substrat (12) est attaché au boîtier (14) en attachant un châssis d'attache sur une paroi intérieure du boîtier (14), ledit châssis d'attache étant choisi parmi le groupe comprenant le premier châssis (22), le second châssis (24), et une combinaison comprenant au moins un des châssis précédents.

9. Procédé selon la revendication 5, dans lequel le dispositif de traitement de gaz d'échappement (100) est un filtre à particules diesel.
